# EUROPEAN PATENT APPLICATION

(11) **EP 2 083 386 A1**
(43) Date of publication of application: **29.07.2009**
(21) Application number: 09275003.3
(22) Date of filing: 26.01.2009
(51) Int. Cl.: G06Q 30/00

(54) **Advertisement annotation system and method**

(30) Priority: 25.01.2008 GB 0801429
(71) Applicant: Decisive Media Limited, Milton, Keynes MK9 2AH (GB)
(72) Inventor: Pyper, Charlie, London Greater London EC2M 5PD (GB)
(74) Representative: Exell, Jonathan Mark

(57) **Abstract**

An advertisement annotation system and method is disclosed. The system includes a media player (50) and a remote database (20). The remote database (20) is arranged to store annotations and index data associated with advertising media data. The media player (50) is arranged to output advertising media data to a user and is responsive to receipt of instructions to output the advertising media data to obtain annotations and index data associated with the advertising media data from the remote database (20) and to output the or each annotation during output of the advertising media data in dependence on the respective index data.

## Description

### Field of the Invention

The present invention relates to an advertisement annotation system and method that is particularly applicable to web based video advertising content.

### Background to the Invention

It is becoming increasingly common for websites and the like to offer some form of feedback functionality to users to enrich the user's experience of the site, enable comments, discussion and the like.

The feedback functionality can range from basic forums to more complex web pages or even entire sites dedicated to the user community.

While the feedback functionality is becoming more and more elaborate, it is all provided by the website itself and embedded within the web pages being served.

While this ensures that a website has control over the functionality provided, it is also a great burden as the functionality must be coded into the web pages themselves each time the functionality is to be made available. This obviously also makes maintenance a particular problem as the increased complexity of web pages makes it much more difficult to differentiate between content and functional code.

### Statement of Invention

According to an aspect of the present invention, there is provided an advertisement annotation system comprising a media player and a remote database, the remote database being arranged to store annotations and index data associated with advertising media data, the media player being arranged to output advertising media to a user, wherein the media player is responsive to receipt of instructions to output the advertising media to obtain annotations and index data associated with the advertising media and to output the annotations during output of the advertising media in dependence on the index data.

Preferably, the media data includes video and/or audio data and the index data comprises time index data relative to the play time of the video and/or audio data. Alternatively, the media data may include visual data and the index data comprises a position relative to the visual data when output.

Preferred embodiments of the present invention seek to provide the ability to add web 2.0 functionality into online video.

Preferably, the media player comprises a web page component. The web page component may comprise a web page banner.

Upon passing a cursor passing over the web page component, the web page is preferably arranged to generate instructions to output the advertising media data.

The index data for an annotation may comprise a time code indicating a time relative to the advertising media data.

The media player may include a timeline representing play time of the advertising media data and is arranged to overlay a marker for each annotation on the timeline at a position dependent on the index data. The media player may be arranged to display the annotation upon selection of the marker by a user.

The media player may be arranged to receive an annotation an index data from a user and to transmit said annotation and index data to the remote database.

According to another aspect of the present invention, there is provided a computer implemented advertisement annotation method comprising:
storing annotations and index data associated with advertising media data in a database accessible to a plurality of websites;
operating a media player component within each of the plurality of websites; upon receipt of instructions to output advertising media data to a user at one of the media player components obtaining annotations and index data associated with the advertising media data from the database; and,
outputing the or each annotation during output of the advertising media data in the media player component in dependence on the respective index data.

The method may further comprise operating the web page component in a web page banner.

The method may further comprise generating instructions to output the advertising media data upon detecting a cursor passing over the web page component.

The method may further comprise displaying a timeline representing play time of the advertising media data in the media player component and overlaying a marker for each annotation on the timeline at a position dependent on the index data.

The method may further comprise displaying the annotation upon selection of the marker by a user.

The method may further comprise receiving an annotation an index data from a user and transmitting said annotation and index data to the remote database.

The functionality of embodiments of the present invention is provided by a media player component or application such as a viewer of an online video. The media player enables a user to add their own comments or other media such as video, links etc and to associate this comment with a point on the timeline in the video.

The comments can be viewed by other viewers when the video reaches the point on the timeline that the initial comment was added. When the video is shared around the internet the comments remain associated with the video. The important point to note is that the functionality is built into the instance of the video player and not into the web page around the player.

Embodiments of the present invention seek to provide, amongst others:
Ability to add / edit / remove a campaign (a campaign is made of multiple add placements) per user
Ability to serve the adverts onto a 3^{rd} party webpage
Ability to schedule the serving of the adverts
Ability to limit / set the exposure of the adverts
Ability to target the adverts per Geographic region
Ability to target the adverts per keyword
Ability to target the adverts into certain parts of a webpage and to individual webpage
Ability to measure fully every single click on an advert and every time an advert is served

### Brief Description of the Drawings

Embodiments of the present invention will now be described by way of example only with reference to the accompanying drawings in which:
Figure 1 is a schematic diagram of an advertisement annotation system according to an embodiment of the present invention;
Figures 2 to 4 are screenshots of a web page illustrating aspects of an embodiment of the present invention in operation;
Figures 5 to 8 are screenshots of a portion of a video advert being output by an embodiment of the present invention;
Figure 9 is a schematic diagram showing data communications in an embodiment of the present invention;
Figure 10 is a schematic diagram of an embodiment of the present invention;
Figure 11 is a schematic diagram of an alternate embodiment of the present invention; and,
Figures 12 and 13 are screenshots of a part of a website illustrating optional aspects of an embodiment of the present invention.

### Detailed Description

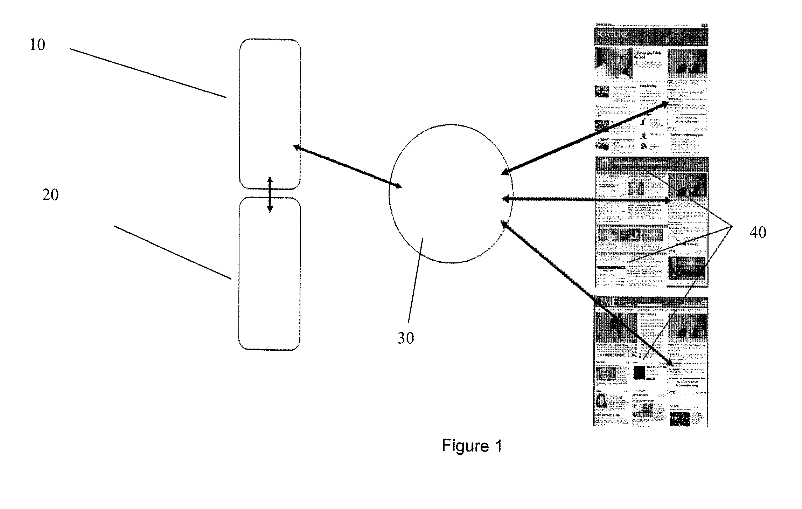

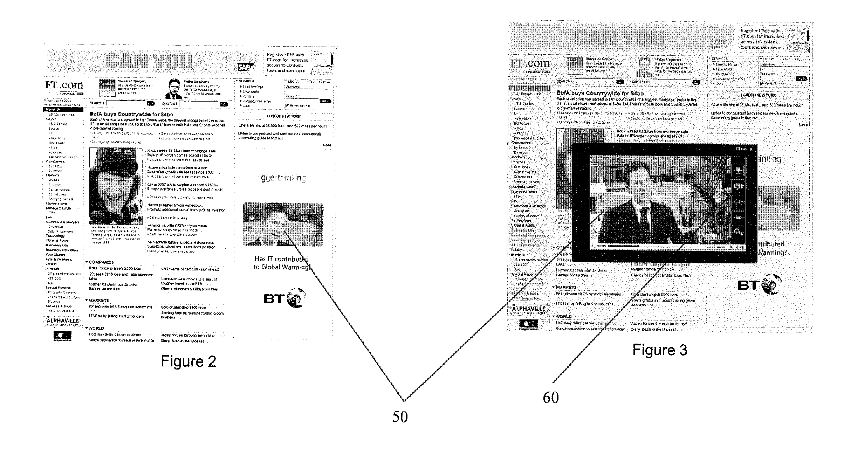

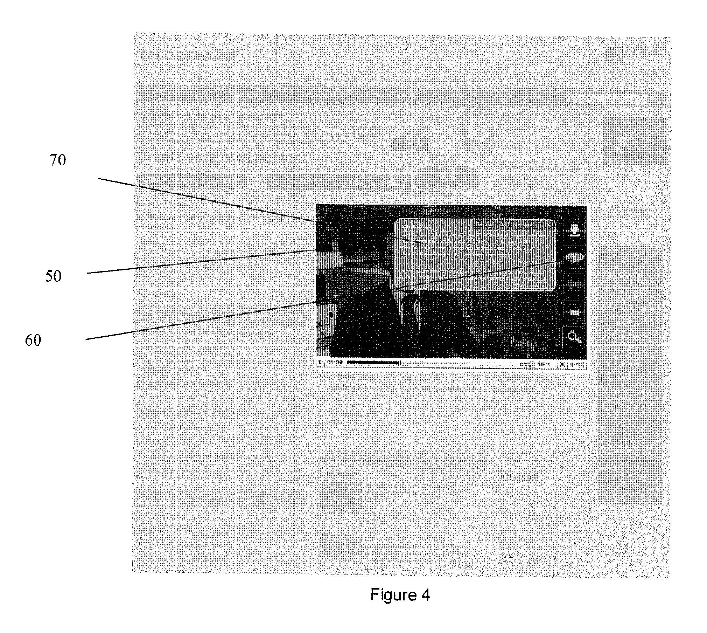

Figure 1 is a schematic diagram of an advertisement annotation system according to an embodiment of the present invention and Figures 2 to 4 are screenshots of a web page illustrating aspects of an embodiment of the present invention in operation.

The advertisement annotation system includes a content server 10, an annotation repository 20 and a media playing component 50. Content is served from the content server 10 to the media playing component 50 embedded in or otherwise linked to web pages 40 via a network such as the internet 30.

For example, when a web page 40 is accessed that includes a video banner advert served from an embodiment of the present invention, the media playing component 50 on the web page 40 contacts the content server 10 via the internet 30 to obtain the video content to be output.

Upon receipt of a request for content, the content server 10 cross references with the annotation repository 20 to identify annotations associated with the content. The content and any annotations (and annotation metadata which is discussed below) are returned to the media playing component 50 for output.

In addition to the media playing controls which are common in media playing components, in embodiments of the present invention the media playing component also includes an annotation user interface (in this embodiment in the form of a toolbar 60 and input window 70 but this could be implemented in other ways such as via context menus or the like). The annotation user interface is normally used to add annotations to the content.

When an annotation is added to the content, it is associated with the current point at which the content is being played. In order to identify this point, a time code (for example an integer identifying to the second between 0 (start of content) and the total number of seconds of the content) is obtained. The time code is transmitted along with identification of the content and the annotation itself to the annotation repository 20 for association with the content.
As such, an annotation added at one web page by one user becomes substantially immediately available to another user viewing the content on another web page 40.

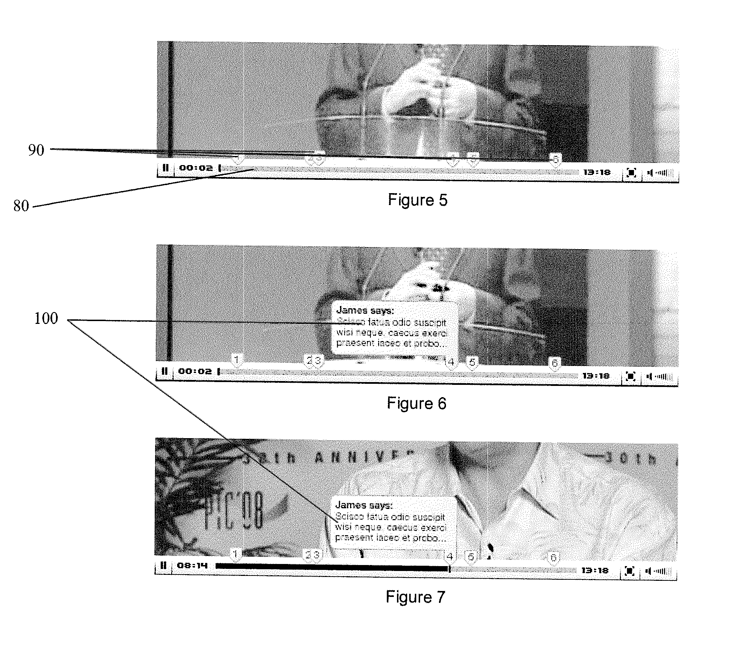

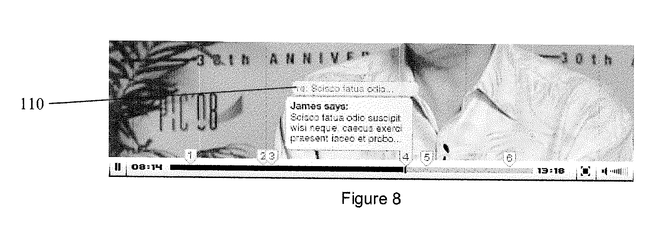

Figures 5 to 8 are screenshots of a portion of a video advertisement being output by an embodiment of the present invention.

As discussed above with reference to Figures 1 to 4, content and any annotations (and annotation metadata which is discussed below) are returned to the media playing component 50 for output. Note that the content and annotations and metadata could be collectively returned or transmitted separately.

The metadata includes time codes associated with each annotation.

Upon receipt of the content, it can be output by the media playing component as normal. However, using the time codes, the media playing component is arranged to overlay markers 90 (or other flags) over a timeline 80 for the content, each marker indicating an annotation for that point in time.

In one arrangement, when the user rolls his pointer over a marker point 90, the player pauses and shows the comment/annotation. Rolling off the comment/annotation continues the movie after a short delay (so accidental roll-offs are not acted upon).

In another arrangement, comments/annotations may be automatically shown when the video output reaches the particular marker point 90. The player 50 may display the comment for a predetermined amount of time or stop at each marker point until instruction to continue by the user, this is in the form of a play button within the comment bubble itself.

Next and previous comment buttons may be used jump to the specific place in the movie where a user has commented.

To comment, a user simply clicks the timeline and a form is displayed in, over or alongside the video.

To reply to a comment a user clicks on the comment itself. Replies 110 may be displayed above original comments.

When a comment has multiple threads, a bubble may appear above the comment.

When clicked the bubble expands and may also cause the first comment to contract.

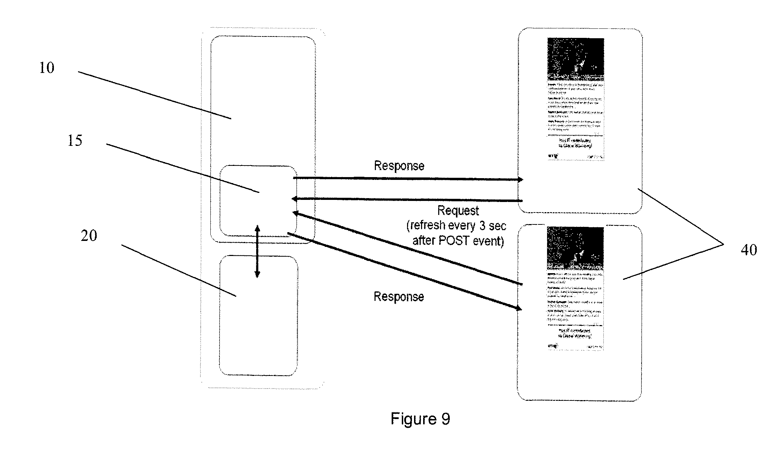

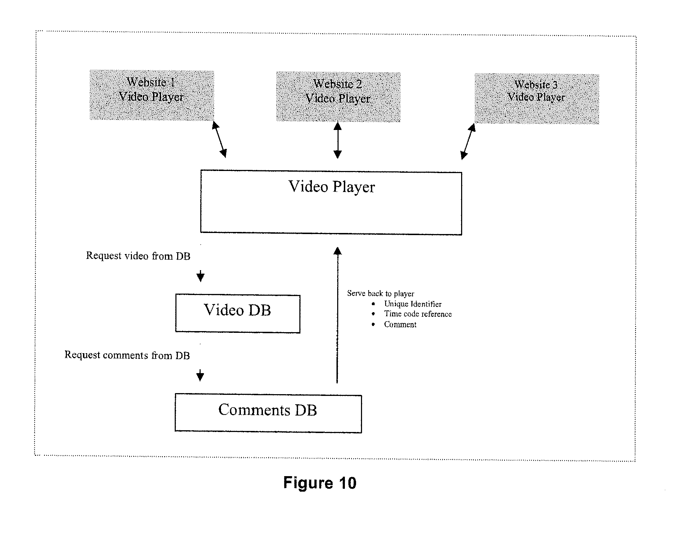

Figure 9 is a schematic diagram showing data communications in an embodiment of the present invention. Figure 10 is a schematic diagram of an embodiment of the present invention.

In this embodiment, the content server 10 is a web server which includes a database access component 15 that is arranged to communicate with the annotation repository 20 (which in this embodiment is a database).

Requests from media playing components are transmitted using JSON (JavaScript Object Notification) over the representational state transfer (REST) transport method in this embodiment, although it will be appreciated that any protocol, technology or language could be used. Upon receipt of a request, the content server 10 uses the database access component 15 to query the annotation repository 20 to obtain any annotations and associated metadata. This is then returned using a JSON response, series of responses or stream.

The media playing component 50 is arranged to periodically refresh the request (in this embodiment every 3 seconds) to ensure any new annotations are identified and received. If the content is already being served or streamed, a new annotation may be reported to the media playing component 50 in a separate JSON respone so as not to interrupt output of the content.

AJAX could be used to implement the media playing component 50 and at least aspects of the content server 10.

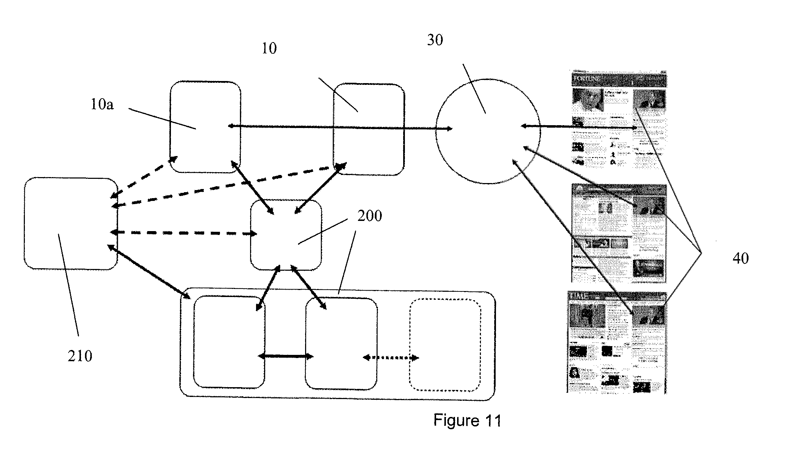

Figure 11 is a schematic diagram of an alternate embodiment of the present invention.

In this embodiment, a fallback content server 10a is operated to provide fault tolerance. Additionally, a database cluster 200 is used to store annotations and metadata to again provide fault tolerance. A management server 210 is used to monitor both the content servers 10, 10a and database cluster 200 via a heartbeat signal or the like and adjust operation as necessary.

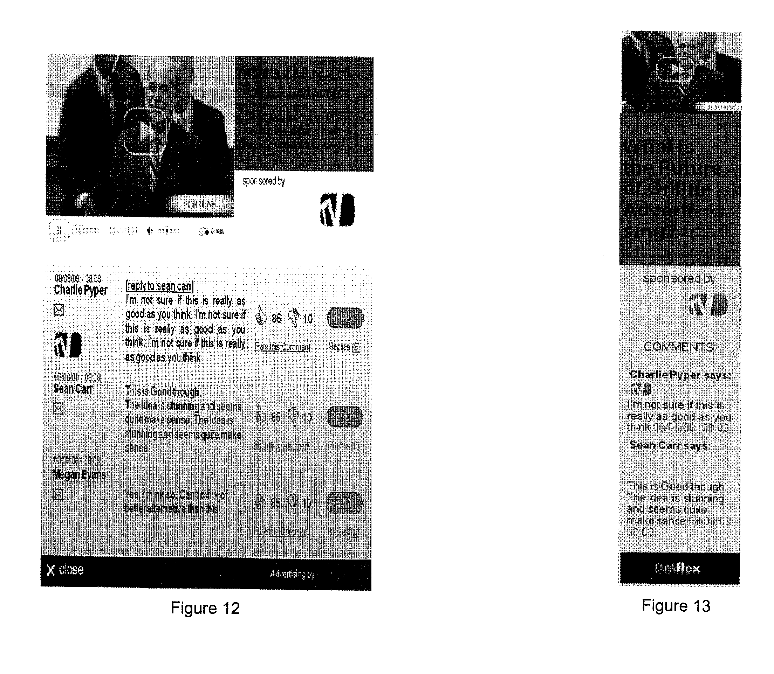

Figures 12 and 13 are screenshots of a part of a website illustrating optional aspects of an embodiment of the present invention.

Figures 12 and 13 illustrate aspects of the media playing component 50. For example, if the web page 40 hosting the component resizes the area available it can be seen that the component can adapt without needing rewriting. Options such as ranking or ratings are also possible.

### Technical overviews

There are two core pieces of functionality that enable this to happen.
1) The ability to view comments
2) The ability to add comments.

### View comments

Once a video has been called by a request from a user, the player is installed into the browser via the <object> tag. Within the object tag is a <src> reference to a unique identifier which identifies the video to be played from a central database. Once the video has been selected an action script will query the database that will pull all the comments that have been made on the video and the references on the timeline. The timeline reference points will then be added onto the timeline as markers.

### Add comments

The ability to add the comments is preferably via the instance of the flash player. A form built into the player allows the comments to be added. Once the user clicks "submit" the action script for the submitted comments will take the closest key frame(the point in the timeline) and the users comments and add this into a database.

### Commenting functionality overview

It will be appreciated that by associating annotations and additional content with media rather than a particular page media is displayed upon, embodiments of the present invention enable the ability to add web 2.0 functionality into all manner of situations such as banner advertising.

For example, embodiments of the present invention enable the ability to push commercial messages and functionality to an audience within a banner advert.

Additional applications and functionality that may be offered by embodiments of the present invention, particularly although not exclusively) in the context of banner adverts or other intra site served content include:
- Discussion boards built into content itself and accessible anywhere the content is served
- Group functionality - creation of micro communities within content
- Intra site messaging - ability for users to message each other within content even though the content is accessed by users at different sites
- Document upload and sharing - ability for users to share documents via uploading and association with an index in content
- Event listing - full event listing application including appointment scheduler may provided within content
- Video upload and sharing- ability for users to share videos with a community within other content - this may be video commentary, links to other associated video etc
- Audio upload and sharing- ability for users to share sound files with a community
- RSS feed integration -ability for users to add their own content feeds
- Creation of dedicated space in the heart of the community - ability for users to create their own micro sites
- User generated commentary on all of the above - ability for user to generate commentary
- Live online event platforms - ability serve live video content
- Next generation of media player - web 2.0 tools built into streamed or served video

Embodiments of the present invention may be used to offer:
Chat adverts
Chat adverts with live and on-demand video
Registration forms
IM with Google, Yahoo, Facebook
E-commerce engine
Webcam conference
Surveys
Full microsites
Discussion groups
Blog submission
Windows Updates
Bookmarking
Ability to SMS / MMS via banner advert

In a traditional banner advert, when a user clicks the advert the user is redirected to the advertiser's website

In an embodiment of the present invention, once the user rolls over / clicks the advert, web 2.0 functionality is served into the advert such as illustrated.

Web 2.0 functionality typically include some of the following features/techniques:
- Rich Internet Application techniques, often Ajax-based
- Semantically valid XHTML and HTML markup
- Microformats extending pages with additional semantics
- Folksonomies (in the form of tags or tagclouds, for example)
- Cascading Style Sheets to aid in the separation of presentation and content
- REST and/or XML- and/or JSON-based APIs
- Syndication, aggregation and notification of data in RSS or Atom feeds
- Mashups, merging content from different sources, client- and server-side
- Weblog-publishing tools
- Wiki or forum software, etc., to support user-generated content

Although references have been made to actions when a mouse cursor passes over a marker, component etc, it will be appreciated that other actions such as a mouse click or non mouse related actions could also be the trigger.

While the above embodiments have been discussed with reference to a central database of content (and in particular to video content), it will be appreciated that any source could be used. Where the media player is instructed to output content (which again need not be video, it could be audio or some other media feed or some combination), if the content does not have a pre-assigned identifier (which could be provided in a header etc), the media player may be arranged to calculate a unique identifier based on characteristics of the content (such as some form of hash function). In this manner, pre-existing annotations could be found as the unique identifier will always link the content to the annotations irrespective of where it came from, the format, how it is provided etc. In the case of content that is new to the comments database, a new record would be formed indexed by the unique identifier to enable subsequent comments to be saved.

It will be appreciated that embodiments of the present invention are not limited to a particular content type, format or delivery mechanism. Similarly, while various technologies are discussed above, embodiments of the present invention could be implemented using any appropriate technology, platform or language.

## Claims

1. An advertisement annotation system comprising a media player and a remote database, the remote database being arranged to store annotations and index data associated with advertising media data, the media player being arranged to output advertising media data to a user, wherein the media player is responsive to receipt of instructions to output the advertising media data to obtain annotations and index data associated with the advertising media data from the remote database and to output the or each annotation during output of the advertising media data in dependence on the respective index data.

2. An advertisement annotation system according to claim 1, wherein the media player comprises a web page component.

3. An advertisement annotation system according to claim 2, wherein the web page component comprises a web page banner.

4. An advertisement annotation system according to claim 2 or 3, wherein upon passing a cursor passing over the web page component, the web page is arranged to generate instructions to output the advertising media data.

5. An advertisement annotation system as claimed in any preceding claim, wherein the index data for an annotation comprises a time code indicating a time relative to the advertising media data.

6. An advertisement annotation system according to any preceding claim, wherein the media data includes video and/or audio data.

7. An advertisement annotation system according to any preceding claim, wherein the media player includes a timeline representing play time of the advertising media data and is arranged to overlay a marker for each annotation on the timeline at a position dependent on the index data.

8. An advertisement annotation system according to claim 7, wherein the media player is arranged to display the annotation upon selection of the marker by a user.

9. An advertisement annotation system according to claim 7, wherein the media player is arranged to receive an annotation an index data from a user and to transmit said annotation and index data to the remote database.

10. A computer implemented advertisement annotation method comprising: storing annotations and index data associated with advertising media data in a database accessible to a plurality of websites;
operating a media player component within each of the plurality of websites; upon receipt of instructions to output advertising media data to a user at one of the media player components obtaining annotations and index data associated with the advertising media data from the database; and,
outputing the or each annotation during output of the advertising media data in the media player component in dependence on the respective index data.

11. A method according to claim 10, further comprising operating the web page component in a web page banner.

12. A method according to claim 10 or 11, further comprising generating instructions to output the advertising media data upon detecting a cursor passing over the web page component.

13. A method according to claim 10, 11 or 12, further comprising displaying a timeline representing play time of the advertising media data in the media player component and overlaying a marker for each annotation on the timeline at a position dependent on the index data.

14. A method according to claim 13, further comprising displaying the annotation upon selection of the marker by a user.

15. A method according to any of claims 10 to 14, further comprising receiving an annotation an index data from a user and transmitting said annotation and index data to the remote database.
